# EUROPEAN PATENT SPECIFICATION

(11) **EP 0 622 016 B1**
(45) Date of publication and mention of the grant of the patent: **06.03.1996**
(21) Application number: 94830195.7
(22) Date of filing: 26.04.1994
(51) Int. Cl.: A01G 27/00

(54) **An improvement in a controlled irrigation device for plants**
Verbesserung an einer Vorrichtung zum kontrollierten Bewässern von Pflanzen
Perfectionnement d'un dispositif d'irrigation controlée pour plantes

(30) Priority: 27.04.1993 IT BO930093 U
(43) Date of publication of application: 02.11.1994
(73) Proprietor: G.F. S.r.l., I-42015 Correggio (IT)
(72) Inventor: Negroni, Pietro, I-40065 Pianoro, Bologna (IT)
(74) Representative: Lanzoni, Luciano

(56) References cited:
- EP-A- 0 394 199
- FR-A- 2 156 477
- US-A- 4 042 150
- US-A- 4 157 770

## Description

The invention of the disclosure has a particular advantage in that it has no need of being attached to an electricity supply.

Many controlled and continuous irrigation devices are well-known, for vases of flowers or plants situated on balconies or terraces, utilized especially during holiday periods, or at other moments when the owner may be away.

Most of the examples in the prior art are electronic devices, essentially constituted by a electronic programmer connected to a running water supply through an open tap and having at its output a series of hoses arranged such as to reach the plants which have to be watered. The programmer establishes the watering modalities by programming a timer (set by a user) and acts on a valve connected to the tap and regulating the flow of water from the supply to the hoses. The user, acting on a series of buttons and/or knobs provided on the programmer, has only to select the irrigation program he or she wants, and the program does the rest: watering time, duration of watering operation, day of watering and so on.

Such devices, however, present some drawbacks, one of which being that the device itself is dependent on the electrical supply, so that the supply cannot be turned off, which the user usually prefers to do when leaving his or her dwelling for a considerable amount of time.

A further drawback is that the tap has to be left open, and if, during the user's absence, the device should become faulty, there might ensue a constant and very damaging flow of water into the room housing the device.

A still further drawback is the high cost of these devices, in relation to their usefulness, which after all is usually only on the occasions when the user leaves his or her house for a longish period of time.

The present applicant addressed the above problems when realising the device of patent IT 1,234,704, which comprises a water container and distributor provided at its base with a plurality of outlet holes for the water and an open bath to receive said water. The bath is housed internally in the container and can be pivoted on the container at a horizontal axis passing through its centre of gravity (calculated when the bath is full). Valve means are also provided (constituted by a tap) which act on a supply pipeline of water to the bath, varying the water supply to the bath. The device further comprises a counterweight to maintain the bath in a water-receiving position, and to bring the bath back into the same position after it has emptied itself into the container by rotating on its axis.

The above solution adequately solves the problem of delivering a constant but small quantity of water so as to avoid overflow risks, but presents other drawbacks deriving from impurities contained in the irrigating water. Where the salt (especially calcium) content of mains water is high, residues form about the tap and cause a diminution, or in any case variations in the water delivery rate.

The principal aim of the present invention is to obviate the above-described drawbacks by providing an irrigation device comprising a bath for controlled distribution of water over a length of time, like to the above-described patent filed by the same applicant, and further provided with means for delivering water from the tank which, apart from their primary function, also serve to prevent any blocking of the tap due to impurities in the water.

The invention as claimed therefore provides a reliable irrigation device that has no need of electric or water supplies, and which supplies water to the plants notwithstanding any impurities in the water.

Further characteristics and advantages of the present invention will better emerge from the detailed description that follows, of an embodiment of the invention, illustrated in the form of a non-limiting example in the accompanying drawings, in which:
- figure 1 is a schematic illustration of the device in a working configuration;
- figure 2 is a lateral view of an embodiment of the invention with some parts removed to better evidence others, including an inset in enlarged scale showing means for positioning a water supply pipe;
- figure 3 shows, with some parts removed to better evidence others, a detail of a further embodiment of the invention;
- figure 4 shows a schematic illustration of the two limit positions of a bath, first during a filling phase and then in an emptying phase;
- figure 5 is a perspective view, with some parts removed to better evidence others, of a distributing container according to the invention;
- figure 6 shows a lateral view (again with some parts removed to better evidence others) of a further embodiment of the invention, showing a bath during an emptying phase;
- figure 7 is a frontal view, with some parts removed better to evidence others, of the embodiment of figure 6, showing a bath during an emptying phase;
- figure 8 is a partial frontal view, with some parts removed to better evidence others, of the embodiment of figure 6, showing a bath during a filling phase and with two details shown in enlarged scale, relating to an outlet hole in plan view from above and in a frontal view with some parts removed, during an emptying phase.

With reference to the figures, the device principally comprises two elements: a container and distributor 1 of water and at least one open-topped bath 3 for receiving the water, which bath 3 is housed in the container 1 and pivoted to it.

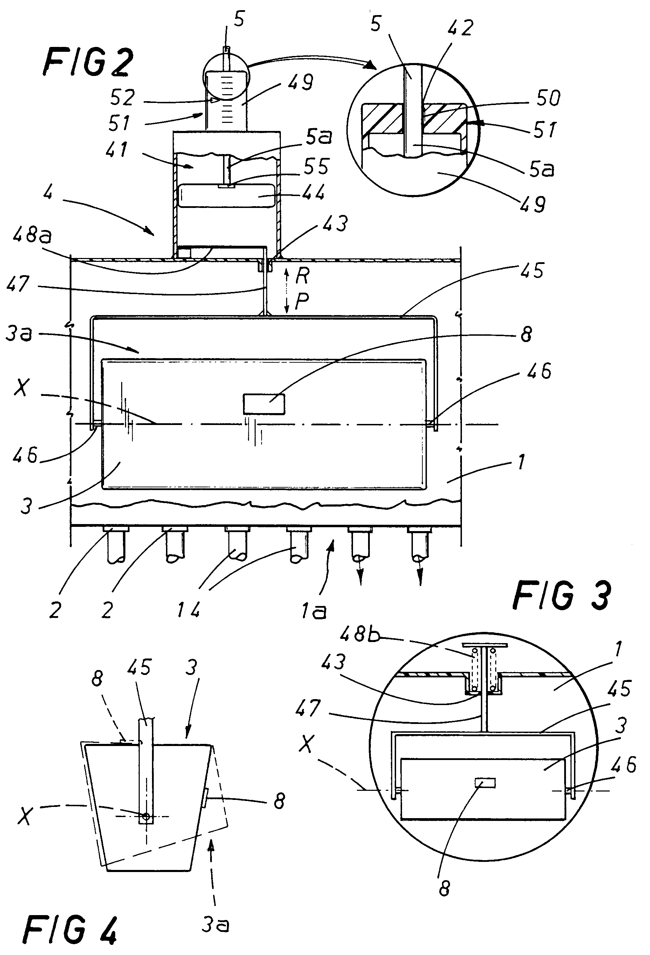

As can be seen in the embodiment of figures 2, 3 and 4, the container 1 is box-shaped and affords, on its base 1a, a plurality of water outlet holes 2, while the bath 3 has a truncopyramidal shape and is arranged internally of the container 1 with its open side 3a (being the larger base of the truncopyramid) upturned and opposite to the base container 1a.

The bath 3 is pivoted, as will be described in more detail hereinbelow, on the container 1 on its horizontal centre of gravity, denoted by X and calculated to correspond to a point whereat the water level is just below the rim of the bath 3.

4 denotes means for regulating the water delivery, connected to a water supply pipe 5 (preferably connected up to a tank 12 or in any case to a low-pressure water source).

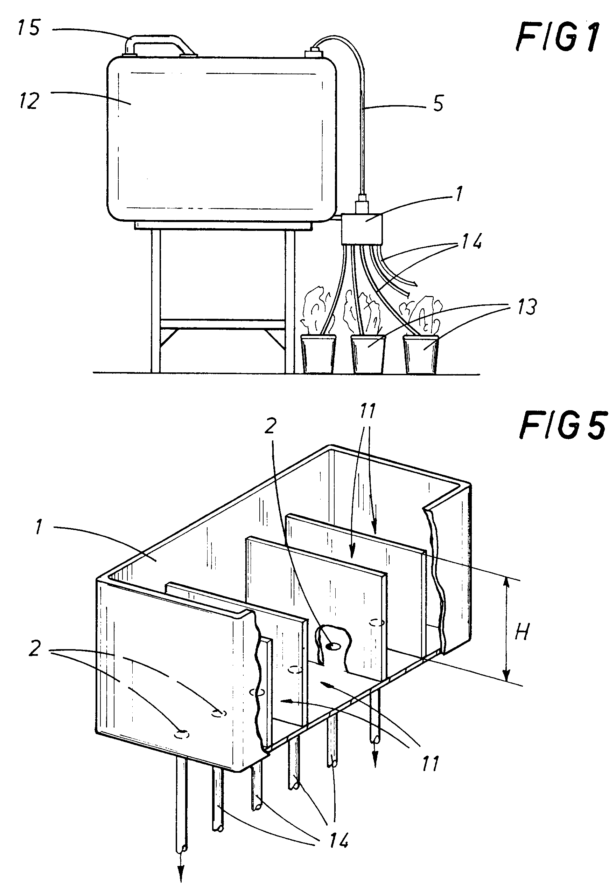

In the case illustrated in figure 1, the water is supplied by a portable tank 12, provided with a handle 15 and positioned above the water outlet.

The water delivery regulators comprise at least one chamber 41 having a horizontal section S which in the illustrated embodiment is constant, and is superiorly associated to the container 1 and provided superiorly with an inlet opening 42 connected to the water supply pipe 5, and inferiorly with an outlet opening 4 into the bath 3.

The chamber 41 further exhibits a floating piston 44 having a slightly smaller surface than the section S of the chamber 41. The floating piston 44 is vertically slidable internally to the chamber 41 and can be positioned at different heights between the inlet opening 42 and the outlet opening 43, in order to control variations in the water head and thus water delivery from the outlet opening 43.

To position the floating piston 44 stably, the chamber 41 is provided with a stiffened pipe end 5a corresponding to a free end of the water supply pipe 5, (the pipe end 5a can even be constituted by a second pipe, stiffer than the original water supply pipe 5). The pipe end 5a has its free end turned downwards, constituting a vertical stop to the thrust developing from the volume of water contained in the chamber on the floating piston 44.

At or near the inlet opening 42 of the chamber 41 are located means for fixing the pipe end 5a at different heights corresponding to any desired floating piston 44 position. The inset of figure 2 shows a possible embodiment of the means for fixing the pipe end 5a, obtained by sliding said pipe end 5a through a like-shaped seating 50, a sufficient friction coefficient being thus obtained to permit manually positioning of the pipe 5a, and consequently the floating piston 44, at a desired height while at the same time not causing the pipe end 5a to be unwantedly moved due to the force exerted on it by the water acting inferiorly on the floating piston 44.

When the device is functioning, the water flows into the chamber 41 through the pipe end 5a up until the floating piston 44, pushed upwards by the water, comes into contact with the free end 53 of the pipe end 5a, which obstructs it and prevents water exit up until the water level falls below the height corresponding to the contact between the floating piston 44 and the free end 53 of the pipe end 5a.

A striker element 55 is advantageously provided at the pipe end 5a; said striker element 55 is made in an easily elastically deformable material, such as to obtain a greater adhesion of the same to the edges of the free end and better prevent water passage.

A outer cover 51 is provided at the point where the pipe 5a is fixed, which cover 51 externally exhibits a graduated scale 49 having an indicator 52 solid to the pipe end 5a and indicating the different heights and thus the different pressures at which the water exits from the outlet opening 43.

The bath 3 is associated to the container 1 at the outlet opening 43 of the chamber 41 by means of a fork 45. The fork 45 exhibits support points 46 supporting the bath 3 at axis X and a vertical rod 47 having a smaller section than the aperture of outlet opening 43, being slidable inside the latter and superiorly associated to elastic means 48 providing vertical and opposite elastic reaction R to the weight force P exerted downwards by the bath 3 when full.

The bath 3, as in the applicant's previous patent IT 1,234,704, receives the water while remaining stable and in its original position until the water reaches up to just below its rim. At this point the centre of gravity axis X is just operative, but once the above-mentioned level is surpassed, the natural centre of gravity of the bath 3 moves, causing the bath 3 to rotate on its axis X and its side 3a to move into a position where it is practically facing the holes 2 (see figure 4, broken lines), whereat the water is poured into the container 1. Then the empty bath 3 returns into its original position, helped by a plate 8 acting as counterweight. The water channels into the holes 2 and thus into the pipes 14, whereby it is conducted to the vases 13 containing the plants to be watered.

Each time the bath 3 fills it moves downwards before returning to a higher position than before once emptied: the rod 47 (preferably made of metal or a rigid plastic material), which consequently performs a vertical sliding movement internally of the outlet opening 43 of the chamber 41, removes residues from the outlet opening 43 and guarantees a constant water flow.

The device is programmed by varying the water delivery: this is done by altering the floating piston 44 level, using the graduated scale as a measure. By increasing the water head there will be a greater water outlet through the outlet opening 43: once the water has flowed out of the outlet opening 43, it is collected in the bath 3 and distributed as described above.

To vary the frequency of the bath 3 emptying operations, the volume of the bath 3 can be changed, or a second bath 3 might be provided, having a greater volume than the first and being directly pivoted on the container 1 downstream of the bath 3, so as to empty at longer time intervals.

The elastic means 48 might be a flexible sheet of metal 48a, as in figure 2, associated at one of its ends to a fixed point in the chamber 41 or the container 1 and fixed at another end to the rod 47.

In a further embodiment, illustrated in figure 3, the 48 comprises a spring 48b acting between the fork 45 and a fixed point on the chamber 41 or the container 1.

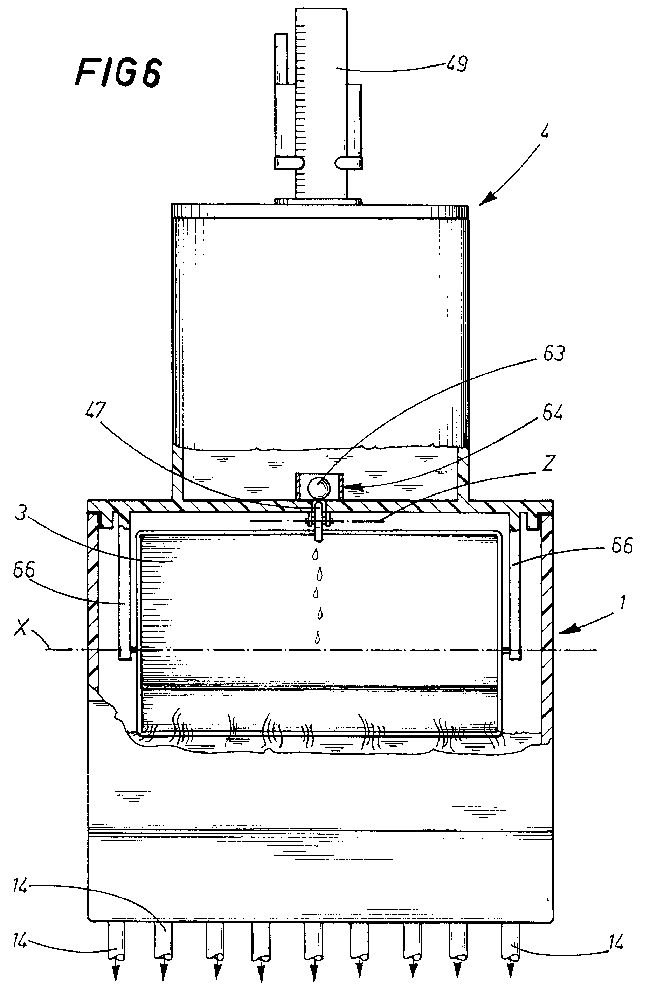

In the embodiment of figures 6, 7 and 8, where the bath 3 is triangular prismatic, and is pivoted to the container 1 by two fixed stirrups 66, the rod 47 is supported by a support 61 pivoted on an axis Z solid to the container 1 or the chamber 41.

The support 61 exhibits a striker portion 62, camshaped in the figures, for the bath 3, which interacts with the bath 3 when the latter is rotated.

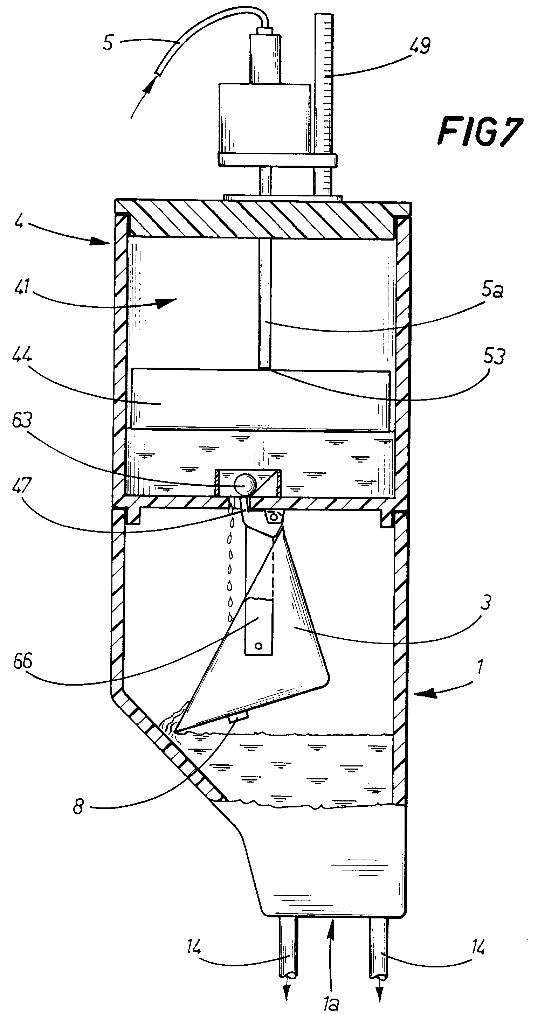

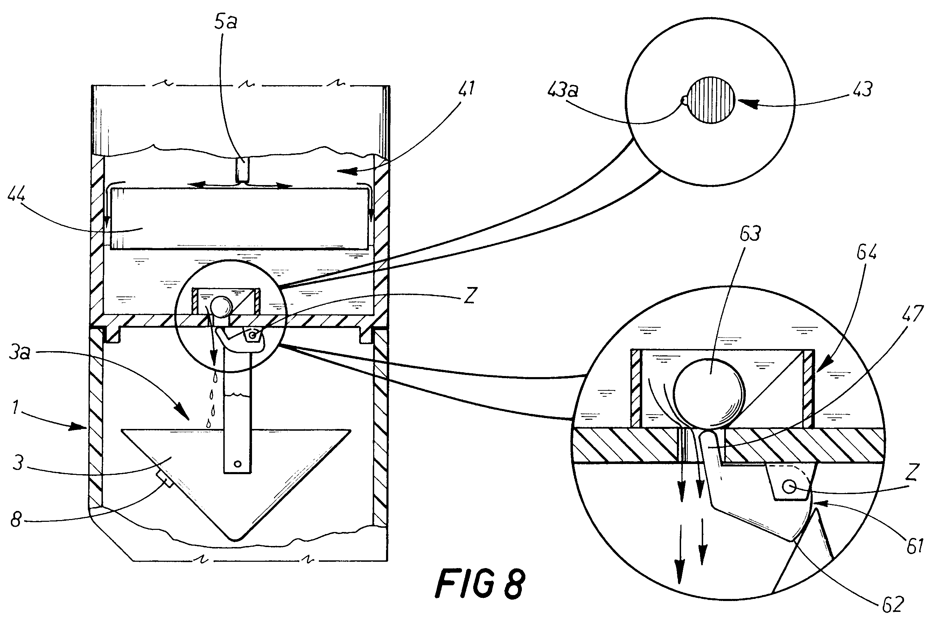

The support 61 is mobile between a first position (shown in figure 8), whereat it is subject to the force of its own weight and the rod 47 is external to the outlet opening 43, and a second position (shown in figures 6 and 7 and in the enlarged detail of figure 8) in which it is subject to a thrust by the rotated bath 3 and the rod 47 is at least partially inserted in the outlet opening 43.

Thus the rod 47 is set in alternating motion at fillings and emptyings of the bath 3.

Figure 8 shows how the outlet opening 43 can be provided with a circular opening exhibiting a slot 43a. A seating 64 might be provided in the chamber 41 at the outlet opening 43 to receive (by effect of force of gravity) a sphere of heavier material than water and having a diameter which is superior to that of the circular portion of the outlet opening 43. In this way, water contained in the chamber 41 can flow out through the slot 43a, falling into the underlying bath 3. When the rod 47 inserts in the outlet opening 43 in order to prevent the formation of residues, the sphere 63 is displaced allows a greater flow of water to pass, in order to add the action of the rod 47 to the drawing action of the greater-than normal flow of water through the slot 43a. In the figures, the flow of water is indicated by un-numbered arrows or drops.

At the holes 2 the container 1 can be provided with a plurality of superiorly-open cells 11 which subdivide the inferior portion by a height H not inferior to that reached by a quantity of water equal to the volume of the bath 3 (and in any case by a height such as to permit the emptying and filling movements of the bath 3). The cells 11 subdivide the volume of water into corresponding smaller volume, each of which is destined to serve vases 13 joined up to the holes 2 by hoses 14. In figure 5 such a subdivision is illustrated, where, in an embodiment which is different from that of the other figures, a container 1 not provided with the bath 3 is sectioned horizontally at a greater height than that reached by the cells 11.

The cells 11 illustrated in figure 5 have different volumes according to the different quantities of water to be provided, but could have the same volume, naturally if it were necessary to feed equal quantities of water to different plants.

## Claims

1. A controlled irrigation device for plants, in particular for balcony or house plants, comprising:
a water container (1) provided with a series of water outlet holes (2) made on one base (1a) of the container (1);
a bath (3) for receiving water from a water source (12), housed in the container (1) and having an upwardly-facing open side (3a), and being pivoted to the container (1) on a bath horizontal axis (X), which axis is passing through the centre of gravity of the bath (3) when filled with water up to the upper rim of said bath (3);
means (4) for regulating a delivery rate of water to the bath (3), acting on a first water supply pipe (5) to the bath (3); said means (4) being arranged above the open side (3a) of the bath (3) and regulating a delivery of water into the bath (3) via an outlet opening (43);
means (8) for maintaining the bath (3) in a position whereat the open side (3a) faces in an upwards direction in order to receive water from the first water supply pipe (5) up to when water arrives at a level above said horizontal axis;
said means (8) having a further function of returning the bath (3) to said position whereat the open side (3a) faces in an upwards direction, after the bath (3) has rotated due to an unbalancing effect of received water arriving at a level above said horizontal axis (X) and has unloaded said water into the container (1); characterised by
a rod (47), connected to the bath (3) and having a smaller section than said outlet opening (43) and in at least one position of the bath (3), being slidably inserted in said outlet opening (43) such as to prevent a build-up of residues deriving from water-borne impurities at said outlet opening (43) and further
characterised in that the means (4) for regulating water delivery comprise:
a chamber (41) associated to the container (1) and provided with:
an inlet opening (42) connected to the first water supply pipe (5);
said outlet opening (43) for allowing water to flow into the bath (3);
a floating piston (44) having a smaller surface than a minimum internal horizontal section of the chamber (41), being vertically slidable internally of the chamber (41) and which can be prevented from reaching above determined heights between the inlet opening (42) and the outlet opening (43), in order that a water head in the chamber (41) can be pre-established and regulated;
a stiffened free end (5a) of the first water supply pipe (5), facing the floating piston (44) and functioning as a striker to stop an upwards vertical sliding of said floating piston (44) resulting from an upwards-pushing force exerted by the water head volume in the chamber (41).

2. A controlled irrigation device for plants, as in claim 1, characterised in that the rod (47) is associated to a support (61) pivoted on a horizontal axis (Z) solid to the container (1) or the chamber (41), and exhibits a striker portion (62) interacting with the bath (3) when the bath (3) is rotated to empty water;
said support (61) being mobile between a first position, whereat it is subject to the force of its own weight and the rod (47) is external to the outlet opening (43), and a second position,
whereat it is subject to a thrust by the bath (3) when the bath (3) is in a rotated position, and the rod (47) is inserted in the outlet opening (43), in order to set the rod (47) in alternating motion relative to a filling and an emptying of the bath (3).

3. A controlled irrigation device for plants, as in claim 1, characterised in that the bath (3) is associated to the container (1) at the outlet opening (43) through a fork (45) exhibiting support points (46) acting on the bath (3) at the horizontal axis (X) and an attachment point defined by said rod (47), slidable internally to the outlet opening (43) and associated to an elastic element (48) providing an opposite elastic reaction (R) to a weight force (P) exerted downwards by the bath (3) when full, said rod (47) being subject to alternating motion at fillings and at emptyings of the bath (3).

4. A controlled irrigation device for plants, as in claim 2 or 3, characterised in that the free end (5a) of the water supply pipe (5) is provided with vertical positioning means such that said free end (5a) can be regulated at various heights inside the chamber (41), according to a graduated scale (49) of height reference.

5. A controlled irrigation device for plants, as in claim 2 or 3, characterised in that the free end (5a) is provided with means for vertically positioning said free end (5a) at various heights inside the chamber (41), according to a graduated scale (49) of height reference, which means comprise a seating (50) having a through-hole which is equal to an external transversal section of the free end (5a), and constitutes a sealed passage for the free end (5a).

6. A controlled irrigation device for plants, as in claim 3, characterised in that the elastic element (48) comprises a flexible metal sheet (48a) associated at one end to a fixed point on the chamber (41) or on the container (1) and at another end to the rod (47).

7. A controlled irrigation device for plants, as in claim 3, characterised in that the elastic element (48) comprises a spring (48b) acting between a part of the fork (45) and a fixed point on the chamber (41) or the container (1).

8. A controlled irrigation device for plants, as in claim 1, characterised in that the container (1) is provided with a plurality of cells (11) at the holes (2), which cells (11) are superiorly open and subdivide an inferior portion by a height (H) which is not inferior to a height reached by a quantity of water equal to a volume of the bath (3), such that the volume of water is subdivided into smaller volumes to be directed to individual vases (13) connected to the holes (2).

9. A controlled irrigation device for plants, as in claim 1, characterised in that the floating piston (44) is provided, at a point destined to contact with the free end (5a) of the water supply pipe (5), with a striker element (55) made in an elastically compression-deformable material, such that the striker element (55) adheres to the free end (5a) to prevent an unwanted outflow of water from the supply pipe (5).

## Patentansprüche

1. Eine Vorrichtung zum kontrollierten Bewässern von Pflanzen, insbesondere für Balkon- oder Zimmerpflanzen, enthaltend:
einen Wasserbehälter (1), versehen mit einer Reihe von Auslassöffnungen (2), die in den Boden (1a) des Behälters (1) eingearbeitet sind;
eine Wanne (3) zur Aufnahme von Wasser aus einer Wasserquelle (12), die in dem Behälter (1) angeordnet ist und eine nach oben gerichtete offene Seite (3a) aufweist, und die mit ihrer eigenen horizontalen Achse (X) an den Behälter (1) angelenkt ist, welche Achse dabei durch das Baryzentrum der Wanne (3) verläuft, wenn diese bis zu dem oberen Rand der genannten Wanne (3) selbst mit Wasser gefüllt ist;
Mittel (4) zur Regulierung der Wasserzulaufmenge in die Wanne (3), welche auf eine erste Wasserzulaufleitung (5) zu der Wanne (3) wirken; wobei die genannten Mittel (4) oberhalb der offenen Seite (3a) der Wanne (3) angeordnet sind und den Zufluss des Wassers in die Wanne (3) regulieren, und zwar durch eine Auslassöffnung (43);
Mittel (8) zum Festhalten der Wanne (3) in einer Position, in welcher die offene Seite (3a) in eine nach oben gehende Richtung zeigt, so dass diese Wasser aus der ersten Wasserzulaufleitung (5) bis zu dem Punkt aufnimmt, in dem das Wasser an einen Stand oberhalb der genannten horizontalen Achse gelangt; wobei die genannten Mittel (8) eine weitere Aufgabe haben, und zwar die Rückführung der Wanne (3) in die genannte Position, in welcher die offene Seite (3a) in die nach oben gehende Richtung zeigt, nachdem die Wanne (3) dadurch, dass das eingelaufene Wasser auf einen Stand über der genannten horizontalen Achse (X) gelangt ist, aus dein Gleichgewicht geraten ist und das genannte Wasser in den Behälter (1) entladen hat, gedreht war; **dadurch gekennzeichnet,** dass eine Stange (47), die an die Wanne (3) angeschlossen ist und einen Kleineren Querschnitt als die genannte Auslassöffnung (43) hat, in wenigstens einer Position der Wanne (3) gleitbar in die genannte Auslassöffnung (43) eingesetzt ist, so dass ein Ansammeln von aus Wasserunreinheiten kommenden Rückständen an der genannten Auslassöffnung (43) verhindert wird; und weiter **gekennzeichnet,** dass die Mittel (4) zur Regulierung der Wasserzufuhr wie folgt enthalten:
eine Kammer (41), verbunden mit dem Behälter (1) und versehen mit:
einer Einlassöffnung (42), die an die erste Wasserzulaufleitung (5) angeschlossen ist;
der genannten Auslassöffnung (43), um es dem Wasser zu erlauben, in die Wanne (3) zu fliessen;
einen Schwimmerkolben (44) mit einer Kleineren Oberfläche als der geringste interne horizontale Querschnitt der Kammer (41), welcher vertikal im Inneren der Kammer (41) gleitbar ist, und der daran gehindert werden kann, über bestimmte Höhen zwischen der Einlassöffnung (42) und der Auslassöffnung (43) hinaus zu reichen, so dass ein Wasseranschlag in der Kammer (41) vorbestimmt und reguliert werden kann;
ein versteiftes freies Ende (5a) der ersten Wasserzulaufleitung (5), welches dem Schwimmerkolben (44) zugewandt ist und die Aufgabe eines Anschlags hat, um das vertikale Aufwärtsgleiten des genannten Schwimmerkolbens (44) zu stoppen, das sich aus einem Druck nach oben ergibt, der von dem Wasseranschlagvolumen in der Kammer (41) ausgeübt wird.

2. Eine Vorrichtung zum kontrollierten Bewässern von Pflanzen nach Patentanspruch 1, **dadurch gekennzeichnet,** dass die Stange (47) mit einer Halterung (61) verbunden ist, angelenkt an eine fest mit dem Behälter (1) oder der Kammer (41) verbundenen horizontalen Achse (Z), und einen als Anschlag ausgebildeten Abschnitt (62) aufweist, der mit der Wanne (3) zusammenwirkt, wenn die Wanne (3) zum Ablassen des Wassers gedreht ist; wobei die genannte Halterung (61) zwischen einer ersten Position, in welcher sie der Kraft ihres eigenen Gewichtes unterliegt und die Stange (47) sich ausserhalb der Auslassöffnung (43) befindet, und einer zweiten Position, in welcher sie einem Druck durch die Wanne (3) unterliegt, wenn sich die Wanne (3) in ihrer gedrehten Position befindet und die Stange (47) in die Auslassöffnung (43) eingeschoben ist, bewegt werden kann, so dass die Stange (47) in einer wechselweise Bewegung jeweils zum Füllen und zum Leeren der Wanne (3) versetzt wird.

3. Eine Vorrichtung zum kontrollierten Bewässern von Pflanzen nach Patentanspruch 1, **dadurch gekennzeichnet,** dass die Wanne (3) an der Auslassöffnung (43) mit dem Behälter (1) durch eine Gabel (45) verbunden ist, welche zwei Stützpunkte (46) aufweist, die an der horizontalen Achse (X) auf die Wanne (3) einwirken, sowie einen Befestigungspunkt, der durch die genannte Stange (47) beschrieben wird, gleitbar im Inneren der Auslassöffnung (43) und verbunden mit einem Federelement (48), welches eine entgegenwirkende elastische Reaktion (R) zu der Gewichtskraft (P) erzeugt, die bei gefüllter Wanne (3) nach unten ausgeübt wird, wobei die genannte Stange (47) einer wechselweisen Bewegung beim Füllen und beim Leeren der Wanne (3) unterzogen wird.

4. Eine Vorrichtung zum kontrollierten Bewässern von Pflanzen nach Patentanspruch 2 oder 3, **dadurch gekennzeichnet,** dass das freie Ende (5a) der Wasserzulaufleitung (5) mit Mitteln zur vertikalen Positionierung versehen ist, so dass das genannte freie Ende (5a) innerhalb der Kammer (41) auf verschiedene Höhen eingestellt werden kann, und zwar nach einer Meßskala (49) für die Höhenmarkierungen.

5. Eine Vorrichtung zum kontrollierten Bewässern von Pflanzen nach Patentanspruch 2 oder 3, **dadurch gekennzeichnet,** dass das freie Ende (5a) mit Mitteln zur vertikalen Positionierung des genannten freies Endes (5a) auf verschiedenen Höhen innerhalb der Kammer (41) versehen ist, und zwar nach einer Meßskala (49) für die Höhenmarkierungen, welche Mittel einen Sitz (50) mit einer durchgehenden Öffnung enthalten, welche gleich einem äusseren Querschnitt des freien Endes (5a) ist und einen dicht abschliessenden Durchlass für das freie Ende (5a) selbst bildet.

6. Eine Vorrichtung zum kontrollierten Bewässern von Pflanzen nach Patentanspruch 3, **dadurch gekennzeichnet,** dass das Federelement (48) ein flexibles Metallplättchen (48a) enthält, das mit seinem einen Ende an einen festen Punkt an der Kammer (41) oder an dem Behälter (1) angeschlossen ist und mit dem anderen Ende an die Stange (47).

7. Eine Vorrichtung zum kontrollierten Bewässern von Pflanzen nach Patentanspruch 3, **dadurch gekennzeichnet,** dass das Federelement (48) eine Feder (48b) enthält, die zwischen einem Teil der Gabel (45) und einem festen Punkt an der Kammer (41) oder an dem Behälter (1) wirkt.

8. Eine Vorrichtung zum kontrollierten Bewässern von Pflanzen nach Patentanspruch 1, **dadurch gekennzeichnet,** dass der Behälter (1) entsprechend zu den Auslassöffnungen (2) mit einer Anzahl von Zellen (11) versehen ist, welche Zellen (11) nach oben hin offen sind und den unteren Teil in einer Höhe (H) unterteilen, die nicht geringer ist als die Höhe, die von einer dem Volumen der Wanne (3) entsprechenden Menge Wasser erreicht wird, so dass das Wasservolumen in kleinere Volumen unterteilt wird, um zu den einzelnen, mit den Auslassöffnungen (2) verbundenen Pflanzengefässen (13) geleitet zu werden.

9. Eine Vorrichtung zum kontrollierten Bewässern von Pflanzen nach Patentanspruch 1, **dadurch gekennzeichnet,** dass der Schwimmerkolben (44) an einem Punkt, der dazu bestimmt ist, mit dem freien Ende (5a) der Wasserzulaufleitung (5) in Berührung zu kommen, mit einem Anschlagelement (55) versehen ist, welches aus einein elastisch druckverformbaren Material bestellt, und zwar so, dass das Anschlagelement (55) an dem freien Ende (5a) anhaftet, um ein unerwünschtes Ausfliessen von Wasser aus der Zulaufleitung (5) zu verhindern.

## Revendications

1. Un dispositif d'irrigation contrôlée pour plantes, en particulier pour les plantes de balcon ou d'appartement, comprenant:
un réservoir d'eau (1) doté d'une série d'orifices d'écoulement d'eau (2) pratiqués sur l'une des bases (1a) du réservoir 1.
un godet (3) destiné à recevoir l'eau d'une arrivée d'eau (12), logé dans le réservoir (1) et ayant un côté ouvert dirigé vers le haut (3a) et pivotant sur le réservoir (1) sur un axe horizontal du godet (X), lequel axe passe par le centre de gravité du godet (3) quand il est rempli d'eau jusqu'au bord supérieur dudit godet (3).
des moyens (4) de régulation du débit d'eau dans le godet (3), agissant sur un premier tuyau d'alimentation en eau (5) au godet (3); ces moyens (4) étant disposés au-dessus du côté ouvert (3a) du godet (3) et régulant un débit d'eau dans le godet (3) par un orifice d'écoulement (43);
des moyens (8) destinés à maintenir le godet (3) dans une position où le côté ouvert (3a) se trouve dirigé vers le haut, de façon à recevoir l'eau du premier tuyau d'alimentation en eau (5) jusqu'à ce que l'eau arrive à un niveau au-dessus dudit axe horizontal;
lesdits moyens (8) ayant une fonction supplémentaire consistant à ramener le godet (3) dans ladite position, où le côté ouvert (3a) se trouve dirigé vers le haut, après que le godet a accompli un mouvement de rotation du à l'effet déséquilibrant de l'eau reçu quand elle arrive à un niveau situé au-dessus dudit axe horizontal (X), et a déchargé ladite eau dans le réservoir (1);
caractérisé par une tige (47), reliée au godet (3) et ayant une plus petite section que ledit orifice d'écoulement (43) et coulissant à l'intérieur dudit orifice d'écoulement (43) dans au moins une position du godet, de façon à empêcher l'accumulation de résidus dérivant des impuretés contenues dans l'eau au niveau dudit orifice d'écoulement (43), et caractérisé en outre en ce que les moyens (4) de régulation du débit d'eau comprennent:
une chambre (41) associée au réservoir (1) et dotée de:
un orifice d'admission (42) raccordé au premier tuyau d'alimentation en eau (5);
ledit orifice d'écoulement (43) permettant à l'eau de s'écouler dans le godet (3);
un piston flottant (44) ayant une plus petite surface qu'une section horizontale interne minimale de la chambre (41), coulissant verticalement dans la chambre (41), et qui empêche d'atteindre au-dessus de hauteurs déterminées l'orifice d'admission (42) et l'orifice d'écoulement (43), de façon qu'un battant d'eau dans la chambre (41) puisse être fixé et réglé;
un extrémité libre renforcée (5a) du premier tuyau d'alimentation en eau (5), faisant face au piston flottant (44) et faisant office de butée pour arrêter un coulissement vertical vers le haut dudit piston flottant (44), résultant d'une force de poussée vers le haut exercée par le volume du battant d'eau dans la chambre (41).

2. Un dispositif d'irrigation contrôlée pour plantes tel qu'à la revendication 1, caractérisé en ce que la tige (47) est associée à un support (61) pivotant sur un axe horizontal (Z) solidaire du réservoir (1) ou de la chambre (41), et présente un portion de butée (62) interagissant avec le godet (3) quand le godet (3) est tourné pour vider l'eau; ledit support (61) étant mobile entre une première position, où il est sujet à la force de son propre poids et la tige (47) est extérieure à l'orifice d'écoulement (43), et une deuxième position, où il est sujet à une poussée du godet (3) quand le godet (3) est en position retournée, et la tige (47) est insérée dans l'orifice d'écoulement (43), de façon à mettre la tige (47) en mouvement alternatif pour le remplissage et l'évacuation du godet (3).

3. Un dispositif d'irrigation contrôlée pour plantes, tel qu'à la revendication 1, caractérisé en ce que le godet (3) est associé au réservoir (1) au niveau de l'orifice d'écoulement (43) par une fourche (45) présentant des points de support (46) agissant sur le godet (3) à l'axe horizontal (X) et un point d'attache défini par ladite tige (47), coulissant dans l'orifice d'écoulement (43) et associé à un élément élastique (48) fournissant une réaction élastique opposée (R) à une force (P) exercée vers le bas par le godet (3) quand il est plein, ladite tige (47) étant sujette à un mouvement alternatif lors du remplissage et de l'évacuation du godet (3).

4. Un dispositif d'irrigation contrôlée pour plantes, tel qu'aux revendications 2 ou 3, caractérisé en ce que l'extrémité libre (5a) du tuyau d'alimentation en eau (5) est dotée de moyens de positionnement vertical permettant de régler ladite extrémité libre (5a) à différentes hauteurs à l'intérieur de la chambre (41), selon une échelle graduée (49) de référence en hauteur.

5. Un dispositif d'irrigation contrôlée pour plantes, tel qu'aux revendications 2 ou 3, caractérisé en ce que l'extrémité libre (5a) est dotée de moyens de positionnement vertical permettant de régler ladite extrémité libre (5a) à différentes hauteurs à l'intérieur de la chambre (41), selon une échelle graduée (49) de référence en hauteur, lesquels moyens comprennent un logement (50) ayant un orifice de passage qui est égal à une section interne transversale de l'extrémité libre (5a), et constitue un passage étanche pour l'extrémité libre (5a).

6. Un dispositif d'irrigation contrôlée pour plantes, tel qu'à la revendication 3, caractérisé en ce que l'élément élastique (48) comprend une feuille de métal souple (48a) associée à l'une de ses extrémités à un point fixe de la chambre (41) ou sur le réservoir (1) et à l'autre extrémité sur la tige (47).

7. Un dispositif d'irrigation contrôlée pour plantes, tel qu'à la revendication 3, caractérisé en ce que l'élément élastique comprend un ressort (48b) agissant entre une partie de la fourche (45) et un point fixe de la chambre (41) ou du réservoir (1).

8. Un dispositif d'irrigation contrôlée pour plantes, tel qu'à la revendication 1, caractérisé en ce que le réservoir (1) est doté d'une pluralité de cellules (11) au niveau des orifices (2), lesquelles cellules (11) sont ouvertes supérieurement et subdivisent une portion inférieure par une hauteur (H) qui n'est pas inférieure à une hauteur atteinte par une quantité d'eau égale à un volume du godet (3), tel que le volume de l'eau est subdivisé en des volumes plus petits pour être envoyé dans des vases individuels (13) reliés aux orifices (2).

9. Un dispositif d'irrigation contrôlée pour plantes, tel qu'à la revendication 1, caractérisé en ce que le piston flottant (44) est doté, à un point destiné au contact avec l'extrémité libre (5a) du tuyau d'alimentation en eau (5), d'une butée (55) réalisée dans un matériau élastique déformable par compression, tel que la butée (55) adhère à l'extrémité libre (5a), pour empêcher que l'eau ne déborde du tuyau d'alimentation (5).
